# EUROPEAN PATENT APPLICATION

(11) **EP 4 571 788 A1**
(43) Date of publication of application: **18.06.2025**
(21) Application number: 23215965.7
(22) Date of filing: 12.12.2023
(51) Int. Cl.: H01B 7/14, H01B 7/282, H01B 13/26

(54) **A SUBMARINE POWER CABLE**

(71) Applicant: NKT HV Cables AB, 371 60 Lyckeby (SE)
(72) Inventor: TORVALDSSON, Henrik, Karlskrona (SE); IBN YAICH, Anas, Västerås (SE)
(74) Representative: Kransell & Wennborg KB

(57) **Abstract**

A submarine power cable (1) comprising: a conductor (2); an insulation system (5) including at least a first semiconducting layer (3) provided around the conductor (2), and an insulation layer (4) provided around the first semiconducting layer (3); and a laminate water barrier structure (17) provided around the insulation system (5), the laminate water barrier structure (17) comprising a metallic foil (7) and an adhesive polymer layer (6, 8) arranged in direct contact with the metallic foil (7). The adhesive polymer layer (6, 8) is obtained from a composition comprising a base polymer in an amount of at least 50 wt% and an additive being graphene, graphene or graphite nanoplatelets, graphene oxide, reduced graphene oxide and/or graphite in an amount of between 0.05 wt% and 10 wt%, preferably between 0.25 wt% and 5 wt %, more preferably between 0.5 wt% and 2 wt%, based on the weight of the composition.

## Description

### TECHNICAL FIELD

The present disclosure generally relates to a submarine power cables.

### BACKGROUND

Submarine power cables are installed in marine environments. They may for example be arranged on the seabed, be buried under the seabed, or rise from the seabed to an offshore platform. Submarine power cables are configured specifically for use in marine environments to protect them from for example water ingress, from damage from external marine objects such as anchors, and from fatigue damage due to wave motion. They may also be constructed to withstand large tensional forces during installation at larger depths.

Submarine power cables typically comprise one or more power cores. Each power core may comprise a conductor and an insulation system insulating the conductor. Further, each power core may generally have a water-blocking layer or water-barrier layer to protect the insulation system from water ingress. Traditionally, the water-blocking layer is formed by a lead or lead-alloy layer. Lead is problematic for several reasons and the extraction, production, use, and disposal of lead and its products may lead to significant contamination in soils and waters.

### SUMMARY

A general object of the present disclosure is to provide a submarine power cable that solves or at least mitigates the problems of the prior art.

According to a first aspect, there is hence provided a submarine power cable comprising: a conductor extending along a centre axis; an insulation system including at least a first semiconducting layer provided around the conductor, and an insulation layer provided around the first semiconducting layer; a laminate water barrier structure provided around the insulation system, the laminate water barrier structure comprising: a metallic foil having a first surface facing towards the centre axis and a second surface facing away from the centre axis; and an adhesive polymer layer arranged in direct contact with the fist surface and/or the second surface of the metallic foil. The adhesive polymer layer is obtained from a composition comprising a base polymer in an amount of at least 50 wt% and an additive being graphene, graphene or graphite nanoplatelets, graphene oxide, reduced graphene oxide and/or graphite in an amount of between 0.05 wt% and 10 wt%, preferably between 0.25 wt% and 5 wt %, more preferably between 0.5 wt% and 2 wt%, based on the weight of the composition.

Hereby, an advantageous water barrier structure is provided. Owing to the composition, and in particular the choice and amount of the additive, a laminate water barrier structure having a low water permeability while providing other desired characteristics such as electrical conductivity is achieved. Moreover, such laminate water barrier structure can be made less complex, and/or less costly, compared to prior art solutions using e.g. a lead-based metallic sheath as the water barrier structure. Moreover, by the first aspect, the electrical, mechanical and chemical requirements of a submarine cable can be met in an advantageous manner owing to the composition of the adhesive polymer layer. In particular, by providing an additive being graphene, graphene or graphite nanoplatelets, graphene oxide, reduced graphene oxide and/or graphite, the characteristics of the laminate water barrier structure, such as the electrical properties thereof, can be adapted in an advantageous manner. Moreover, as the composition of the adhesive polymer layer comprises at least 50 wt% of the base polymer, the characteristics of the laminate water barrier structure, such as the water permeability, can be beneficially controlled together with the metallic foil. The more precise characteristics of the laminate water barrier structure may be adapted as desired by adapting the metallic foil (the material and/or wrapping of the metallic foil) and/or varying the amount of the additive, e.g. by increasing the amount of additive to increase the electrical conductivity.

It should be understood that the composition of the adhesive polymer layer comprises at least 50 wt% of the base polymer, and between 0.05 wt% and 10 wt%, preferably between 0.25 wt% and 5 wt %, more preferably between 0.5 wt% and 2 wt%, of the additive, wherein the weight percentage, wt%, is based on the total weight of the composition. The adhesive polymer layer may comprise more than 50 wt% of the base polymer, e.g. at least 70 wt% or at least 90 wt%.

According to one embodiment, the laminate water barrier structure is in direct contact with the insulation system. Hereby, the laminate water barrier structure can prevent, or at least greatly reduce, water penetrating into the insulation system from the outside. For example the laminate water barrier structure is arranged radially outside of, and in direct contact with, the insulation system. The metallic foil of the laminate water barrier structure may e.g. be axially wrapped or radially wrapped around the insulation system. According to one embodiment, the adhesive polymer layer covers between 75 % and 100 % of the first surface and/or the second surface of the metallic foil.

According to one embodiment, the laminate water barrier structure has been thermally joined by heat treatment. Hereby, an efficient means for joining, or bonding, the metallic foil and the adhesive polymer layer is provided. For example, the adhesive polymer layer may have been thermally jointed by heat treatment to the first surface of the metallic foil. According to another example, the adhesive polymer layer may have been thermally jointed by heat treatment to the second surface of the metallic foil. According to yet another example, the adhesive polymer layer may have been thermally jointed by heat treatment to the first and second surfaces of the metallic foil.

According to one embodiment, the adhesive polymer layer is conductive. Hereby, the electric properties of the cable, and of the laminate water barrier structure, can be adapted. Thus, the adhesive polymer layer may be electrically conductive. According to one embodiment, the adhesive polymer layer is semiconductive. For example, the composition of the adhesive polymer layer may comprise carbon black.

According to one embodiment, the laminate water barrier structure is a tape wrapped around the insulation system. Thus, such tape comprises the metallic foil and the adhesive polymer layer arranged in direct contact with the first surface and/or the second surface of the metallic foil, e.g. joined by heat treatment. A tape provides an efficient means for arranging, or wrapping, the laminate water barrier structure around the insulation system.

According to one embodiment, the tape is wrapped around the insulation system with an overlap of subsequent windings. Hereby, it is ensured that the laminate water barrier structures fully covers the insulation system. The overlap between successive layers of the tape provides a shortest water diffusion path of at least 10 mm, more preferably at least 15 mm, more preferably at least 20 mm, more preferably at least 25 mm, more preferably at least 30 mm, more preferably at least 35 mm, and most preferably at least 40 mm.

According to one embodiment, the metallic foil is made of aluminum, an aluminum alloy, copper, copper-alloy such as CuNi-alloy or a CuNiSi-alloy, titanium, titanium alloy. Such material of the metallic foil is preferred both from a wrapping perspective, and from an electrical properties perspective.

According to one embodiment, the metallic foil has a thickness of from 5 µm to 250 µm, preferably from 10 µm to 200 µm, more preferably from 20 µm to 150 µm, more preferably from 25 µm to 100 µm, and most preferably from 30 µm to 75 µm. Such thickness provides advantageous wrapping characteristics, as well as sufficient water barrier properties.

According to one embodiment, the thickness of the adhesive polymer layer is between 10 µm and 300 µm, such as between 50 µm and 100 µm. Such thickness provides advantageous adhesive properties.

According to one embodiment, the composition of the adhesive polymer layer further comprise at least one of the following additional components: an antioxidant, an UV stabilizer, a plasticizer, carbon black, a filler material, slip additives, a pigment. For example, the composition comprises at least 1 wt% antioxidant, 2 wt% of the additive and at least 95 wt% of the base polymer, the base polymer being e.g. LDPE.

According to one embodiment, the additive of graphene, graphene or graphite nanoplatelets, graphene oxide, reduced graphene oxide and/or graphite is mixed with particles from at least one of the following: carbon black, a layered silicate, a clay, a silica-based compound, a zeolite.

According to one embodiment, the additive is a two-dimensional (2D) carbon based material. 2D carbon based material are sheet-like carbon-containing materials. The additive may e.g. be a two-dimensional carbon-based nanomaterial (2D nanomaterials) forming atomically thick nanomaterials that consist of a single to few layers of atoms. According to one embodiment, the additive is at least one of, or a mixture of at least two of, the following: graphene, graphene or graphite nanoplatelets, graphene oxide, reduced graphene oxide and graphite.

For example, the additive is mixture of graphene and graphene oxide, e.g. at a graphene-graphene oxide ratio of 0.5-1.5. For example, for an additive amount of 0.05 wt%, the additive may be 0.025 wt % of graphene and 0.025 wt % of reduced graphene oxide.

According to one embodiment, the base polymer of the composition of the adhesive polymer layer is a thermoplastic polymer. Hereby, the adhesive polymer layer may have thermoplastic properties.

According to one embodiment, the base polymer of the composition of the adhesive polymer layer is PVDC, LLDPE, LDPE, EVA, EMAA or EAA. The base polymer of the composition may be a mixture of at least two of PVDC, LLDPE, LDPE, EVA, EMAA or EAA. Additionally or alternatively, the base polymer of the composition is an engineered thermoplastics such as e.g. PCTFE, LCP. According to one embodiment, the base polymer of the composition of the adhesive polymer layer is a thermosetting polymer, such as XLPE.

According to one embodiment, the additive of the composition of the adhesive polymer layer is in the form of composites or nanocomposites and/or particles or nanoparticles. Hereby, the additive can be distributed in the composition and the resulting laminate water barrier structure in an advantageous manner. For example, the electrical properties, COF and/or the thermal conductivity of the laminate water barrier structure can be improved.

According to one embodiment, the laminate water barrier structure has a water permeability of below 0.05 g / (m²*24 h) (or 0.05 g / (m²*day)). Hereby, the amount of water penetrating into the insulation system from the outside can be kept low. It should be understood that a water permeability of below 0.05 g / (m²*24 h) is reached by the combination of the metallic foil and the above described composition of the adhesive polymer layer. That is, by providing a laminate water barrier structure of a metallic foil and an adhesive polymer layer arranged in direct contact with the metallic foil, wherein the adhesive polymer layer is obtained from a composition comprising a base polymer in an amount of at least 50 wt% and an additive being graphene, graphene or graphite nanoplatelets, graphene oxide, reduced graphene oxide and/or graphite in an amount of between 0.05 wt% and 10 wt%, preferably between 0.25 wt% and 5 wt %, more preferably between 0.5 wt% and 2 wt%, a water permeability of below 0.05 g / (m²*24 h) for the laminate water barrier structure can be achieved. According to one embodiment, the laminate water barrier structure has a water permeability of below 0.05 g / (m²*24 h) (or 0.05 g / (m²*day)). According to one embodiment, the laminate water barrier structure has a water permeability of below 0.01 g / (m²*24 h) (or 0.01 g / (m2*day)) or below 0.001 g / (m²*24 h) (or 0.001 g / (m2*day)) or below 0.0001 g / (m²*24 h) (or 0.0001 g / (m2*day)).

The water permeability may be determined as the water vapor transmission rate, WVTR, according to ISO 15106-1. The WVTR may be determined at a temperature of 40°C and 100% relative humidity (RH).

According to one embodiment, the submarine power cable further comprises a polymeric jacket provided around the insulation system. The polymeric jacket may e.g. comprise a polymeric material that is extruded around the insulation system and/or the laminate water barrier structure, or it may comprise polymeric tape laid around a longitudinal axis of, or radially applied in a helix around, the submarine power cable. The polymeric jacket may be wholly or partly water permeable. According to one embodiment, the laminate water barrier structure is arranged in between the insulation system and the polymeric jacket.

According to one embodiment, the submarine power cable further comprises a second semiconducting layer. For example, the first semiconducting layer may be an inner semiconducting layer arranged in direct contact with, and radially inside of, the insulation layer, and the second semiconducting layer may be an outer semiconducting layer arranged radially outside of the insulation layer.

According to one embodiment, the second semiconducting layer is comprised in the insulation system. The second semiconducting layer may be arranged in direct contact with, and radially outside of, the insulation layer. The second semiconducting layer may form an insulation screen. The first semiconducting layer may form a semiconducting conductor shield. The first semiconducting layer may be arranged closest to the conductor (i.e. closest with regards to the insulation system).

According to one embodiment, the submarine power cable does not comprise a metallic sheath of lead arranged radially outside of the insulation system.

According to one embodiment, the submarine power cable is a lead-free power cable. According to one embodiment, the laminate water-barrier structure is lead-free.

According to one embodiment, the submarine power cable is a HVDC power cable or a HVAC power cable. The submarine power cable may be a high voltage power cable, for example for voltages higher than 72 kV. According to one example, the submarine power cable is a high voltage power cable, or an ultra-high voltage cable, for example for voltages higher than 450 kV, or higher than 550 kV, or higher than 800 kV.

According to one embodiment, the insulation system is more than 8 mm thick. For example, the insulation system is 8-45 mm thick, such as e.g. 8.3-38 mm thick, or 8.8-40.5 mm thick. For example, the first semiconducting layer (or semiconducting conductor shield) is 0.3-3 mm thick and the insulation layer is 8-35 mm thick. According to one embodiment, the second semiconducting layer (or semiconducting insulation shield) is 0.5-2.5 mm thick.

According to one embodiment, the submarine power cable comprises a conductor tape forming the interface between conductor and the first semiconducting layer (or insulation system). The conductor tape may e.g. be 0.1-0.2 mm thick.

Any one of, or all of, the layers in the insulation system and/or the polymeric jacket may be extruded layers. According to one embodiment, any one of, or all of, the layers in the insulation system comprises a thermosetting polymer such as crosslinked polyethylene, XLPE, crosslinked ethylene propylene diene monomer rubber (EPDM), or crosslinked ethylene propylene rubber (EPR). According to one embodiment, any one of, or all of, the layers in the insulation system is thermoplastic, i.e. is formed of a thermoplastic composition. The first semiconducting layer typically comprises an electrically conductive compound, such as e.g. carbon black.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a radial cross section of a submarine power cable of an example embodiment;
Fig. 2 schematically shows a side view of at least a part of the submarine power cable of Fig. 1; and
Fig. 3 schematically shows a radial cross section of a laminate water barrier structure of an example embodiment.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

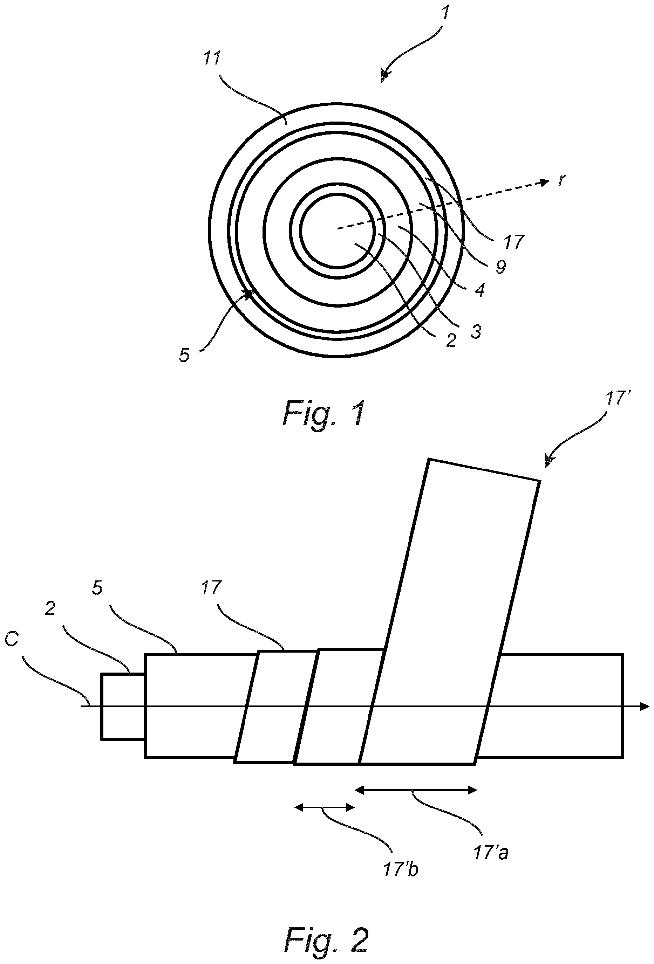

Fig. 1 shows an example of a submarine power cable 1. The submarine power cable 1 is in this example a single power core power cable. However, it should be mentioned that the submarine power cable could comprise several identical power cores to form a multi-core power cable, such as three-phase power cable. The submarine power cable 1 may be a HVDC power cable or a HVAC power cable, for example for voltages higher than 450 kV, or higher than 550 kV, or higher than 800 kV.

In Fig. 1, a radial cross section of an embodiment of a submarine power cable 1 is shown. The radial cross section is a cross section in the radial direction r of the submarine power cable 1, i.e. perpendicular to a central longitudinal axis (extending into the paper). The submarine power cable 1 may e.g. be defined by cylindrical coordinates (by a radial distance r, azimuth φ which is the angle along the circumferential direction, and an axial coordinated along the longitudinal axis).

The submarine power cable 1 comprises a conductor 2. The conductor 2 may for example be stranded, segmental of Milliken type, solid, or a profile wire conductor. The conductor 2 may for example comprise copper or aluminum.

The submarine power cable 1 further comprises an insulation system 5 provided around, and covering, the conductor 2.

The insulation system 5 in the embodiment of Fig. 1 comprises a first semiconducting layer 3 provided around the conductor 2, an insulation layer 4 provided around the first semiconducting layer 3, and a second semiconducting layer 9 provided around the insulation layer 4.

The insulation system 5 may be extruded and comprise a thermosetting or thermoplastic polymer material. In case of extrusion, the polymeric material may for example be crosslinked polyethylene (XLPE), polypropylene (PP), EPDM rubber, or EPR rubber.

Thus, in the embodiment of Fig. 1, the second semiconducting layer 9 is arranged to be in direct contact with, and radially outside of, the insulation layer 4, and the insulation layer 4 is arranged to be in direct contact with, and radially outside of the first semiconducting layer 3. Thus, the first semiconducting layer 3 may form a semiconducting conductor shield and be referred to as an inner semiconducting layer. The second semiconducting layer 9 may form an insulation screen and be referred to as an outer semiconducting layer.

The submarine power cable 1 further comprises a laminate water barrier structure 17 surrounding the insulation system 5. Thus, in the embodiment of Fig. 1, the laminate water barrier structure 17 is in direct contact with the insulation system 5, as it is arranged in direct contact with, and radially outside of, the second semiconducting layer 9. Hereby, the laminate water barrier structure 17 can prevent, or at least greatly reduce, water penetrating into the insulation system 5 from the outside.

Typically, the laminate water barrier structure 17 has a water permeability of below 0.1 g / (m²*24 h) or below 0.05 g / (m²*24 h). Hereby, the amount of water penetrating into the insulation system 5 from the outside can be kept low.

The submarine power cable 1 may furthermore comprise a polymeric jacket 11 provided around the insulation system 5. In the embodiment of Fig. 1, the polymeric jacket is arranged in direct contact with, and radially outside of, the laminate water barrier structure 17. Thus, the laminate water barrier structure 17 is arranged in between the insulation system 5 and the polymeric jacket 11.

The polymeric jacket 11 may e.g. comprise a polymeric material that is extruded around the laminate water barrier structure 17. The polymeric jacket 11 of the embodiment of Fig. 1 may be wholly or partly water permeable.

Turning to Fig. 2 showing a side view of the conductor 2, the insulation system 5 and the laminate water barrier structure 17 of Fig. 1. The conductor 2 is arranged to extend along a longitudinal centre axis C. In Fig. 2, the laminate water barrier structure 17 is a tape 17' wrapped around the insulation system 5. As shown in Fig. 2, the wrapping of the tape 17' around the insulation system 5 is in progress, and in Fig. 2, only a portion of the wrapped tape 17' is shown, but it should be understood that the tape 17' of the laminate water barrier structure 17 typically is wrapped around the insulation system 5 along the longitudinal centre axis C to cover, such as fully cover, the insultation system 5.

The tape 17' typically has a width 17'a and is wrapped helically around the insulation system 5. The tape 17' is preferably wrapped as shown in Fig. 2, with an overlap 17'b of subsequent windings of the tape 17'. Hereby, it is ensured that the laminate water barrier structures 17 fully covers the insulation system 5, and the water diffusion path is made longer compared to a wrapping with no overlap. The overlap may e.g. be at least 10 %, or at least 25 %, or at least 50 % of the width 17'a of the tape 17'. According to one example embodiment, the laminate water barrier structure 17 has a water permeability, or a WVTR, according to ISO 15106-1, of below 0.05 g / (m²*24 h) determined at a temperature of 40°C and 100% RH.

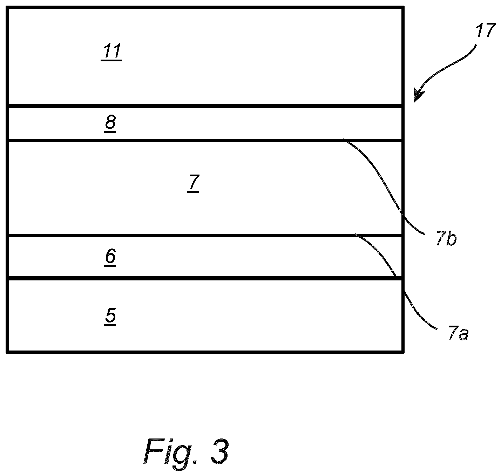

Turning to Fig. 3 showing a radial cross section of the laminate water barrier structure 17 of Fig. 2. In Fig. 3, the laminate water barrier structure 17 comprises a metallic foil 7 having a first surface 7a facing towards the centre axis C (shown in Fig. 2) and a second surface 7b facing away from the centre axis C. Thus, for the example cable 1 of Fig. 1, the first surface 7a is facing the insulation system 5, and the second surface 7b is facing the jacketing layer 11.

The metallic foil may e.g. be made of aluminum, an aluminum alloy, copper, copper-alloy, a CuNi-alloy, a CuNiSi-alloy, iron, or an iron-alloy.

Moreover, the laminate water barrier structure 17 comprises an adhesive polymer layer, here being a first adhesive polymer layer 6 arranged in direct contact with the fist surface 7a of the metallic foil 7, and a second adhesive polymer layer 8 being in direct contact with the second surface 7b of the metallic foil 7. Thus, the metallic foil 7 is arranged in direct contact with an adhesive polymer layer 6, 8 on both its first and second surfaces 7a, 7b. However, it should be mentioned that the laminate water barrier structure may only comprise one adhesive polymer layer, such as only the first adhesive polymer layer 6 or the second adhesive polymer layer 8. Preferably, the first and second adhesive polymer layer 6, 8 have been thermally joined with the metallic foil 7 by heat treatment.

The first and second adhesive polymer layers 6, 8 is obtained from a composition comprising a base polymer in an amount of at least 50 wt% and an additive being graphene, graphene or graphite nanoplatelets, graphene oxide, reduced graphene oxide and/or graphite in an amount of between 0.05 wt% and 10 wt%, preferably between 0.25 wt% and 5 wt %, more preferably between 0.5 wt% and 2 wt%, based on the weight of the composition. Hereby, an advantageous water barrier structure is provided. The additive of the composition of the first and second adhesive polymer layers 6, 8 may e.g. be in the form of composites or nanocomposites and/or particles or nanoparticles. Preferably, the first and second adhesive polymer layers 6, 8 are conductive.

The base polymer of the composition of the first and second adhesive polymer layers 6, 8 may be thermoplastic polymer. As a further example, the base polymer of the composition may be PVDC, LLDPE, LDPE, EVA, EMAA or EAA, or a mixture thereof. Additionally or alternatively, the base polymer of the composition is an engineered thermoplastics such as e.g. PCTFE or LCP.

As shown in Fig. 3, the thickness of the metallic foil 7 and each one of the first and second adhesive polymer layers 6, 8 may differ. For example, each one of the first and second adhesive polymer layers 6, 8 may be thinner compared to the metallic foil 7. According to one example, the thickness of each one of the adhesive polymer layers 6, 8 is between 50 µm and 100 µm, while the thickness of the metallic foil is greater than the thickness of each one of the adhesive polymer layers 6, 8, but smaller than 250 µm.

The inventive concept has mainly been described above with reference to a few examples. However, as is readily appreciated by a person skilled in the art, other embodiments than the ones disclosed above are equally possible within the scope of the inventive concept, as defined by the appended claims. For example, in case the submarine power cable comprises several identical power cores to form a multi-core power cable, such as three-phase power cable, each power core may correspond to that described with reference to the submarine power cable described in Fig. 1. Thus, each power core may at least comprise a conductor 3, an insulation system 5 and a laminate water barrier structure 17 as previously described. The power cores may be stranded and surrounded by a polymeric jacket.

## Claims

1. A submarine power cable (1) comprising:
- a conductor (2) extending along a centre axis (C);
- an insulation system (5) including at least a first semiconducting layer (3) provided around the conductor (2), and an insulation layer (4) provided around the first semiconducting layer (3);
- a laminate water barrier structure (17) provided around the insulation system (5), the laminate water barrier structure (7) comprising:
- a metallic foil (7) having a first surface (7a) facing towards the centre axis (C) and a second surface (7b) facing away from the centre axis (C);
- an adhesive polymer layer (6, 8) arranged in direct contact with the fist surface (7a) and/or the second surface (7b) of the metallic foil (7);
wherein the adhesive polymer layer (6, 8) is obtained from a composition comprising a base polymer in an amount of at least 50 wt% and an additive being graphene, graphene or graphite nanoplatelets, graphene oxide, reduced graphene oxide and/or graphite in an amount of between 0.05 wt% and 10 wt%, preferably between 0.25 wt% and 5 wt %, more preferably between 0.5 wt% and 2 wt%, based on the weight of the composition.

2. The submarine power cable (1) according to claim 1, wherein the laminate water barrier structure (17) is in direct contact with the insulation system (5).

3. The submarine power cable (1) according to any one of the preceding claims, wherein the laminate water barrier structure (17) has been thermally joined by heat treatment.

4. The submarine power cable (1) according to any one of the preceding claims, wherein the adhesive polymer layer (6, 8) is conductive.

5. The submarine power cable (1) according to any one of the preceding claims, wherein the laminate water barrier structure (17) is a tape (17') wrapped around the insulation system (5).

6. The submarine power cable (1) according claim 5, wherein the tape (17') is wrapped around the insulation system (5) with an overlap of subsequent windings.

7. The submarine power cable (1) according to any one of the preceding claims, wherein the metallic foil (7) is made of aluminum, an aluminum alloy, copper, an copper-alloy, titanium or an titanium alloy.

8. The submarine power cable (1) according to any one of the preceding claims, wherein the metallic foil (7) has a thickness of from 5 µm to 250 µm, preferably from 10 µm to 200 µm, more preferably from 20 µm to 150 µm, more preferably from 25 µm to 100 µm, and most preferably from 30 µm to 75 µm.

9. The submarine power cable (1) according to any one of the preceding claims, wherein the base polymer of the composition of the adhesive polymer layer (6, 8) is a thermoplastic polymer.

10. The submarine power cable (1) according to any one of claims 1-8, wherein the base polymer of the composition of the adhesive polymer layer (6, 8) is PVDC, LLDPE, LDPE, EVA, EMAA or EAA.

11. The submarine power cable (1) according to any one of the preceding claims, wherein the additive of the composition of the adhesive polymer layer (6, 8) is in the form of composites or nanocomposites and/or particles or nanoparticles.

12. The submarine power cable (1) according to any one of the preceding claims , wherein the laminate water barrier structure (17) has a water permeability of below 0.05 g / (m²*24 h).

13. The submarine power cable (1) according to any one of the preceding claims, wherein the power cable (1) does not comprise a metallic sheath of lead arranged radially outside of the insulation system (5).

14. The submarine power cable (1) according to any one of the preceding claims, being a lead-free power cable.

15. The submarine power cable (1) according to any one of the preceding claims, being a HVDC power cable or a HVAC power cable.
